# EUROPÄISCHE PATENTSCHRIFT

(11) **EP 3 375 986 B1**
(45) Veröffentlichungstag und Bekanntmachung des Hinweises auf die Patenterteilung: **05.04.2023**
(21) Anmeldenummer: 18158778.3
(22) Anmeldetag: 27.02.2018
(51) Int. Cl.: F01D 25/24

(54) **BAUTEIL EINER TURBOMASCHINE**
TURBOMACHINE COMPONENT
COMPOSANT DE TURBOMACHINE

(30) Priorität: 17.03.2017 DE 102017204539
(43) Veröffentlichungstag der Anmeldung: 19.09.2018
(73) Patentinhaber: MTU Aero Engines AG, 80995 München (DE)
(72) Erfinder: Klingels, Hermann, 85221 Dachau (DE); Bickmeier, Wolfgang, 85238 Petershausen (DE)

(56) Entgegenhaltungen:
- EP-A1- 0 493 667
- EP-A1- 2 048 423
- DE-B- 1 217 711
- DE-T2- 60 037 858
- US-A- 2 452 227
- US-A- 6 099 198

## Beschreibung

Die vorliegende Erfindung betrifft ein Bauteil mit einem Bauteilabschnitt und einem daran angeordneten Flansch zur Verbindung des Bauteils mit einem weiteren Element. Die Erfindung betrifft ferner eine Flanschverbindung mindestens eines derartigen Bauteils mit einem weiteren Bauteil sowie eine Turbomaschine (insbesondere einen Verdichters oder eine Turbine) mit einem Gehäuse, das aus zwei oder mehr Bauteilen mittels einer Flanschverbindung. zusammengesetzt ist.

Ein Flansch dient zum dichten Verbinden von Bauteilen (z.B. Rohren, Maschinenteilen und/oder Gehäuseelementen). Die Verbindung von Flanschen mittels Elementen wie Schrauben und/oder Muttern ist dabei in der Regel zerstörungsfrei lösbar. Aufgabe eines Flansches ist neben der Positionierung der Bauteile zueinander häufig auch die Übertragung von Betriebskräften.

Unter anderem werden einzelne Gehäuse von Turbomaschinen üblicherweise mittels Flanschverbindungen zueinander positioniert. In diesem Fall steht normalerweise die jeweilige Triebwerksachse normal zur Flanschebene. Die einzelnen Gehäuse können wiederum aus verschiedenen Teilen zusammengesetzt sein, die ihrerseits mittels Flanschen verbunden sein können. Beispielsweise sind verschiedene Verdichter-, Brennkammer- und auch Turbinengehäuse bekannt, die aus Halbschalen zusammengesetzt sind, wobei dann die Triebwerksachse in der jeweiligen Flanschebene liegt.

Aus der Druckschrift EP 1 162 347 A1 ist eine Verbindung von Gehäuseteilen einer Dampfturbine bekannt, bei der Zugelemente, die am Umfang der Gehäuseteile verteilt angeordnet sind, die Trennfuge überbrücken. Die Zugelemente üben dabei Kraft auf Formelemente in Gestalt von radialen Vorsprüngen aus, zwischen denen die Zugelemente angeordnet sind. Dadurch werden die Gehäuseteile zusammengepresst.

Steht ein zusammengesetztes Gehäuse unter hohem Innendruck, werden die jeweiligen Bauteile durch die Verschraubung der Verbindungselemente zwar zusammengehalten, doch ist es geometrisch nicht möglich, die Schraube direkt in dem Kraftfluss der umlaufenden Gehäuseschale zu positionieren. So entsteht unter (Druck-)Last ein Biegemoment, das eine Verformung des Gehäuses bewirkt.

Dies kann insbesondere an den Stirnseiten ein Klaffen der Teilfuge zur Folge haben. Die EP 0 889 277 A1 lehrt zur Vermeidung einer Fuge insbesondere an den Stirnseiten die Verwendung von Gehäuseteilen, die eine Gehäuseverlängerung aufweisen, die am Außenumfang von einem koaxial angebrachten, horizontal ungeteilten Ring umfasst wird. Ein mit konstantem Radius gefertigtes Gehäuse wird bei der Verformung eine Gestalt annehmen, die im Querschnitt oval ist. Handelt es sich beispielsweise um ein oder mehrere Gehäuse einer Turbomaschine (speziell eines Verdichters oder einer Turbine), so wird der Laufspalt, also der Spalt zwischen Gehäuse und Rotor, durch diese ovale Form negativ beeinflusst.

Zur Vermeidung der Nachteile werden die Gehäuse häufig nicht rund, sondern ihrerseits oval gefertigt. Die im Betrieb auftretende Verformung soll dann die Abweichung so ausgleichen, dass annähernd Rundheit erreicht wird. Eine solche Fertigung ist jedoch aufwendig. Zudem ist ein derart gefertigtes Gehäuse auf das jeweils vorgesehene Ausmaß an Verformung abgestimmt und daher nicht für einen flexiblen Einsatz optimiert.

Die Druckschrift DE 12 17 711 B offenbart eine Flanschverbindung mit Flanschverbindungsschrauben, die abwechselnd entgegengesetzt geneigt zu einer Ebene angeordnet sind, die zu der Flanschtrennebene senkrecht ist. Aus der Druckschrift US2452227 ist eine Flanschverbindung bekannt.

Die vorliegende Erfindung hat die Aufgabe, eine Technik bereitzustellen, mit der ein Bauteil unter Reduktion oder sogar Vermeidung nachteiliger belastungsbedingter Verformungen mit einem weiteren Element verbunden werden kann. Insbesondere hat die Erfindung die Aufgabe, eine Verbindung von Teilen eines Gehäuses zu ermöglichen, mit der eine Ovalisierung des Gehäuse unter Betriebsbedingungen reduziert bzw. weitestgehend verhindert werden kann.

Die Aufgabe wird gelöst durch ein Bauteil nach Anspruch 1, eine Flanschverbindung gemäß Anspruch 5 und eine Turbomaschine nach Anspruch 8. Vorteilhafte Ausführungsformen sind in den Unteransprüchen, der Beschreibung und den Zeichnungen offenbart.

Ein erfindungsgemäßes Bauteil weist einen Bauteilabschnitt mit einem daran angeordneten Flansch auf, der einem Verbinden des Bauteils mit einem weiteren Element dient; das Bauteil und das weitere Element sind jeweils Teile eines horizontal (also längs, d.h. axial bezogen auf eine Rotorachse) geteilten Gehäuses einer Turbomaschine (insbesondere eines Verdichters oder einer Turbine).

In einer bevorzugten Ausführungsform ist das erfindungsgemäßes Bauteil ein Gehäuseteil das den Heißgaskanal, insbesondere radial außen, begrenzt. Vorzugsweise sind dabei der Flansch und das Gehäuseteil als gemeinsames Stück und integral miteinander ausgebildet, d.h. ohne Fügeverbindung ineinander übergehend oder stoffschlüssig, etwa durch Schweißen, miteinander verbunden.

Am Flansch, der vom Bauteilabschnitt abgewinkelt und/oder sich aus diesem herauswölbend bzw. herausragend ausgebildet ist, sind mehrere Kanäle jeweils zur Aufnahme eines Abschnitts eines Verbindungselements ausgebildet; in sie kann also ein derartiges Verbindungselement (das beispielsweise eine Schraube, ein Bolzen oder ein Stift sein kann) mindestens teilweise ein- oder hindurchgeführt werden bzw. worden sein. Der Kanal bzw. mindestens einer der Kanäle (der bzw. die im Flansch oder den Flansch zum Bauteilabschnitt hin begrenzend ausgebildet sein kann/können) verläuft schräg (also geneigt) zu einem Oberflächenbereich des Bauteilabschnitts, der dem Flansch entgegengesetzt ist (insbesondere also auf einer dem Flansch gegenüberliegenden Seite liegt). Ein dem Flansch entgegengesetzter Oberflächenbereich des Bauteilabschnitts ist ein Oberflächenbereich, dessen Flächennormale parallel zu einer Flanschanlagefläche des betreffenden Flanschs verläuft.

Der Kanal bzw. mindestens einer der Kanäle ist dabei vorzugsweise von dem Oberflächenbereich beabstandet; aufgrund der schrägen Anordnung würde eine geometrische, abstrakte Fortsetzung eines Endes des Kanals (bzw. dessen zentraler Achse) somit eine entsprechende Fortsetzung des Oberflächenbereichs (bzw. einer Tangentialebene daran) schneiden. Ausgehend von einer vorgesehenen Anlagefläche des Bauteils (zur Anlage an einer Oberfläche des weiteren Elements) kann ein derartiger Kanal insbesondere in den Flansch hineinführen oder sogar durch diesen hindurch verlaufen und sich dabei - aufgrund der Schrägheit - dem Oberflächenbereich nähern oder von ihm wegführen.

Eine erfindungsgemäße Flanschverbindung umfasst wenigstens zwei Bauteile, von denen mindestens eines gemäß einer in dieser Schrift offenbarten Ausführungsform eines erfindungsgemäßen Bauteils ausgebildet ist. Die Flanschverbindung umfasst zudem wenigstens ein Verbindungselement, von dem ein Abschnitt zur Befestigung der Bauteile aneinander in oder durch den Kanal bzw. in oder durch mindestens einen der Kanäle geführt ist oder geführt werden kann. Insbesondere umfasst die Bezeichnung "Flanschverbindung" in dieser Schrift einerseits eine Ausführungsform mit bereits verbundenen Bauteilen, andererseits eine Variante in Form eines erst noch zusammenzusetzenden Bausatzes, bei dem also die Bauteile noch nicht aneinander befestigt, dazu aber geeignet sind.

Ein erfindungsgemäßes Bauteil bzw. eine erfindungsgemäße Flanschverbindung ermöglicht eine geringe Ausdehnung des Flansches und damit einen Raumgewinn. Mittels eines durch oder in den schrägen Kanal geführten Verbindungselements kann zudem das Bauteil in geringem Abstand zum Oberflächenbereich mit dem weiteren Element verspannt werden. Dadurch wird das Flanschbiegemoment gegenüber herkömmlichen Flanschverbindungen (bei denen die Kanäle im Wesentlichen parallel zu einem dem Flansch entgegengesetzten Oberflächenabschnitt verlaufen) deutlich verringert. So wird eine große Formstabilität der verbundenen Teile erreicht.

Eine erfindungsgemäße Turbomaschine weist ein Gehäuse auf, das aus zwei oder mehr Bauteilen (die dann also Gehäuseteile sind) mittels einer erfindungsgemäßen Flanschverbindung nach einer der in dieser Schrift offenbarten Ausführungsformen zusammengesetzt ist. Eine derartige Turbomaschine (die ein Verdichter oder eine Turbine sein kann) ermöglicht eine vereinfachte Fertigung bei Verminderung oder sogar Verhinderung einer Ovalisierung des Gehäuses unter Betriebsbedingungen.

Der Kanal bzw. die Kanäle sind vorzugsweise im Wesentlichen kreiszylindrisch ausgebildet. Sie können in den Flansch gebohrt oder gestanzt worden sein, oder der Flansch kann bereits mit den Kanälen angelegt, beispielsweise gegossen worden sein. Unabhängig von ihrer Herstellungsweise können die Kanäle auch als "Bohrungen" bezeichnet werden.

Eine jeweilige Wandung der Kanäle kann in mindestens einem Teilbereich ein Gewinde, beispielsweise in Form eines Gewindeeinsatzes aufweisen, in das ein Verbindungselement eingeschraubt werden kann. Auf diese Weise kann auf ein äußerliches Gegenelement wie beispielsweise eine Mutter verzichtet werden, was Raum und Gewicht spart und die Verbindung kompakter hält. Zudem kann damit die Fixierung des Verbindungselements im Inneren des Bauteils und damit besonders nahe am genannten, dem Flansch entgegengesetzten Oberflächenbereich erfolgen, was ein Auseinanderdriften der verbundenen Bauteile bei Belastung vermindert oder sogar verhindert und damit eine besondere Stabilität der Flanschverbindung bewirkt.

Vorzugsweise grenzt der Oberflächenbereich entlang einer Kante an eine Anlagefläche des Bauteils an, die dazu eingerichtet ist, bei Verbindung des Bauteils mit einem (bzw. dem) weiteren Element an einer Oberfläche des weiteren Elements anzuliegen. Insbesondere kann diese Anlagefläche (die mindestens teilweise eine Oberfläche des Flansches sein kann) von dem besagten Oberflächenbereich abgewinkelt sein; bei einer bevorzugten Ausführungsform steht die Anlagefläche des Bauteils im Wesentlichen senkrecht zum Oberflächenbereich: Dies ermöglicht eine Symmetrie der Flanschverbindung aus dem Bauteil und dem weiteren Element.

Der Kanal bzw. der mindestens eine Kanal verläuft vorzugsweise geneigt zu einer Anlagefläche des Bauteils, beispielsweise mit einem Neigungswinkel (als kleinerem von zwei Lotwinkeln einer zentralen Achse des Kanals auf die Anlagefläche) zwischen 15° und 75°, bevorzugter zwischen 35° und 55°.

Bei einer vorteilhaften Ausführungsform eines erfindungsgemäßen Bauteils umfasst dieses mindestens zwei Kanäle, die in voneinander unterschiedlicher Neigung zum Oberflächenbereich stehen, beispielsweise mit unterschiedlichen Winkeln auf diesen zulaufen. Die Richtung eines ersten der beiden Kanäle kann insbesondere gegenüber der Richtung des zweiten der beiden Kanäle verschwenkt sein, vorzugsweise um eine Achse, die (z.B. in einem Bereich zwischen den Verbindungselementen) entlang einer bzw. der Anlagefläche des Bauteils (zur Anlage an einer Oberfläche des weiteren Elements) verläuft. Die unterschiedlich geneigten Kanäle ermöglichen eine besonders dichte Anordnung von Verbindungselementen und damit eine besonders solide Flanschverbindung.

Vorteilhaft ist eine Ausführungsvariante, bei welcher der Kanal bzw. mindestens einer der Kanäle an einer Öffnung eine Ansenkung zum mindestens teilweisen Aufnehmen eines Kopfes eines (bzw. des) Verbindungselements aufweist, zu dessen Aufnahme der Kanal eingerichtet ist, beispielsweise eines Kopfes einer entsprechenden Schraube oder eines entsprechenden Bolzens. Die Flanschverbindung kann dadurch besonders kompakt ausgebildet werden. Zwischen mindestens zwei benachbarten bzw. je zwei benachbarten Senken ist ein Versteifungssteg angeordnet. Damit kann eine besonders hohe Stabilität der Flanschverbindung erreicht werden.

Erfindungsgemäß ist der eine bzw. mindestens einer der mehreren Kanäle in Form eines (vorzugsweise im Wesentlichen kreiszylindrisch geformten) Sacklochs mit einem Eingang und einem im Inneren des Bauteils angeordneten Kanalende (das durch eine dem Eingang gegenüberliegende Kanalendfläche bestimmt sein kann) ausgebildet. Vorzugsweise weist ein derartiger Kanal in mindestens einem Teilbereich ein Gewinde oder eine Aufnahme für ein Gewindeeinsatz auf, in das bzw. den ein Verbindungselement eingeschraubt werden kann, und/oder einen abgewinkelt zum Kanal verlaufenden Durchlass an eine Außenfläche des Bauteils; ein derartiger Durchlass ist dann vorzugsweise dazu eingerichtet, einen Stift (der dann vorzugsweise durch ein entsprechendes Loch im Verbindungselement geführt werden kann) zum Fixieren des Verbindungselements im Kanal aufzunehmen.

Vorteilhaft ist eine Ausführungsvariante, bei welcher der eine bzw. mindestens einer der mehreren Kanäle das Bauteil durchkreuzt; ein Teil eines derartigen Kanals kann dabei durch den Bauteilabschnitt selbst führen. Ein derartiger Kanal bildet also einen Durchbruch (mit Eingangsloch und Ausgangsloch) aus. So kann er einen Durchgang für ein Verbindungselement bilden; an der Seite des Ausgangslochs kann ein eingeführtes Verbindungselement vorzugsweise in einen Kanal des weiteren Elements eintreten; dieser kann seinerseits als Durchbruch ausgebildet sein oder als ein Sackloch mit einem Eingang und einem im Inneren des weiteren Elements angeordneten Kanalende.

Eine vorteilhafte Ausführungsform einer erfindungsgemäßen Flanschverbindung umfasst dem entsprechend ein erstes Bauteil, bei dem der Kanal bzw. mindestens einer der Kanäle das Bauteil durchkreuzt und ein zweites Bauteil, bei dem der Kanal als Sackloch ausgebildet ist, sowie mindestens ein Verbindungselement, das durch den durchkreuzenden Kanal des ersten Elements in den als Sackloch ausgebildeten Kanal hineingeführt (z.B. geschraubt) ist oder werden kann. In dem Sackloch kann das Verbindungselement vorzugsweise fixiert werden und so die Verspannung der Bauteile bewirken, beispielsweise mittels Gewinden im Sackloch und am Verbindungselement oder mittels eines Stifts und eines zugehörigen Lochs im Verbindungselement (wie oben beschrieben).

Gemäß einer vorteilhaften Ausführungsform ist mindestens eines, vorzugsweise mehrere, insbesondere alle Verbindungselemente als Dehnschraube ausgeführt. Dehnschrauben weisen entlang ihrer Längserstreckung eine gewisse Elastizität auf und erzeugen bei entsprechender Verwendung im eingeschraubten Zustand eine Rückstellkraft, die einem Lösen, etwa durch Vibrationen oder dergleichen, entgegenwirkt. Dadurch kann der Wartungs- und Überprüfungsaufwand reduziert werden.

Gemäß einer weiteren vorteilhaften Ergänzung, wird zwischen dem Kopf der Dehnschrauben und dem Kanal bzw. dem Bauteil eine Hülse eingesetzt, durch welche sich die jeweilige Dehnschraube erstreckt und welche den Einsatz längerer Schrauben ermöglicht. Dies ermöglicht eine größere Dehnlänge und ein höheres Dehnpotential.

Besonders bevorzugt ist eine Ausführungsform eines erfindungsgemäßen Bauteils, die sowohl mindestens einen wie oben beschrieben als Sackloch ausgebildeten (ersten) Kanal als auch mindestens einen das Bauteil durchkreuzenden (zweiten) Kanal aufweist. Zusammen mit einem entsprechend ausgebildeten weiteren Element kann damit eine symmetrische und daher besonders solide Flanschverbindung bewirkt werden. Vorzugsweise sind dabei die Richtungen des ersten und des zweiten Kanals de Bauteils voneinander verschieden, die Richtung des ersten Kanals kann beispielsweise in Bezug auf die Richtung des zweiten der beiden Kanäle um eine Achse verschwenkt sein, die entlang einer Anlagefläche des Bauteils verläuft.

Eine bevorzugte erfindungsgemäße Flanschverbindung umfasst ein erstes und ein zweites Bauteil, bei denen der mindestens eine Kanal bzw. mindestens einer der Kanäle jeweils das jeweilige Bauteil durchkreuzt. Die beiden Bauteile sind dabei so miteinander verbunden oder zu verbinden, dass zwischen zwei entlang dem Flansch benachbarten, das erste Bauteil durchkreuzenden Kanälen und zu diesen versetzt (nämlich in das zweite Bauteil hinein) ein Kanal angeordnet oder anzuordnen ist, der das zweite der Bauteile durchkreuzt. Auf diese Weise können also vorzugsweise entlang dem Flansch abwechselnd von beiden Seiten Verbindungselemente durch die jeweiligen Kanäle geführt (z.B. eingeschraubt) sein bzw. werden. Eine derartige Anordnung ermöglicht einen besonders große Dichte an Verbindungselementen, weil diese in geringem Abstand voneinander von verschiedenen Seiten eingesetzt sein bzw. werden können. Damit kann eine hohe Stabilität der Verbindung erreicht werden. Insbesondere können die beiden Bauteile mit ihren Kanälen mindestens abschnittsweise gemäß einer Gleitspiegelung angeordnet sein, wobei die Anlageflächen der Bauteile vorzugsweise die Spiegelungsebene darstellen.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: eine herkömmliche Flanschverbindung zweier Bauteile in einer Schnittdarstellung;
- Figur 2:: eine Flanschverbindung gemäß einer exemplarischen Ausführungsform der vorliegenden Erfindung in einer Schnittdarstellung;
- Figur 3:: einen Abschnitt der Flanschverbindung der Figur 2 in perspektivischer Ansicht; und
- Figur 4:: einen Abschnitt der Flanschverbindung der Figur 2 in Draufsicht.

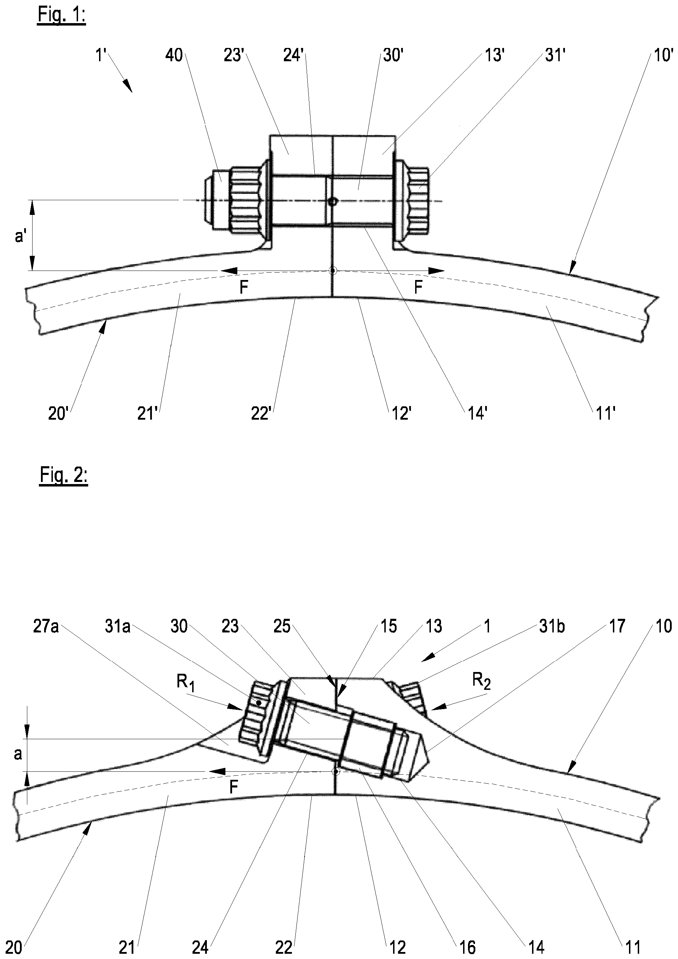

Figur 1 zeigt schematisch ein Beispiel für eine aus dem Stand der Technik bekannte Flanschverbindung 1' in einer Schnittdarstellung. Die beiden Bauteile 10', 20', die insbesondere Gehäuseteile (z.B. Gehäusehälften) einer Turbomaschine sein können, weisen jeweils einen Bauteilabschnitt 11', 21' mit einem Oberflächenbereich 12', 22' auf, dem entgegengesetzt (also gegenüberliegend) jeweils ein Flansch 13', 23' angeordnet ist.

Die Flansche werden jeweils von einem Kanal 14', 24' durchkreuzt, der (bzw. dessen Durchgangsrichtung) in einer Ebene verläuft, die im Wesentlichen parallel zum jeweiligen Oberflächenbereich 12', 22' (bzw. zu einer Tangentialebene dieser Oberflächenebereiche) liegt.

Die Bauteile 10', 20' sind so zueinander angeordnet, dass die Kanäle 14', 24' einander fortsetzen. Durch beide ist ein gemeinsames Verbindungselement 30' geführt, das in diesem Fall eine Schraube ist und einen Kopf 31' aufweist, dem gegenüber eine Mutter 40' aufgeschraubt ist. Durch den Zug von Kopf 31' und Mutter 40' gegeneinander wird die Flanschverbindung 1' zusammengehalten.

Im Betrieb einer Turbomaschine mit derart verbundenen Gehäuseteilen bewirkt der hohe Innendruck Kräfte F, die in entgegengesetzten Richtungen auf die Bau- bzw. Gehäuseteile 10', 20' wirken. Die gezeigte Flanschverbindung kann die Bauteile dabei zwar zusammenhalten, jedoch ist es geometrisch nicht möglich, die Schraube direkt in den Kraftfluss der umlaufenden Gehäuseschale zu positionieren: Der in Figur 1 mit a` gekennzeichnete Abstand zwischen der zentralen Achse des Verbindungselements und der mittleren umlaufenden Gehäusewandstärke bewirkt im Zusammenspiel mit den Kräften F ein Biegemoment am Übergang der Bauteilabschnitte 11', 21' in den Flansch. Durch dieses Biegemoment wird das Gehäuse verformt, weswegen die oben beschriebenen Nachteile auftreten.

In Figur 2 ist demgegenüber schematisch ein Schnitt durch eine erfindungsgemäße Flanschverbindung 1 gezeigt. Diese umfasst zwei erfindungsgemäße Bauteile 10, 20 und eine Mehrzahl an Verbindungselementen 30, die jeweils als Schrauben mit einem Kopf 31a, 31b ausgebildet sind. Die beiden Bauteile 10, 20 weisen jeweils einen Bauteilabschnitt 11, 21 mit einem Oberflächenbereich 12, 22 auf, dem entgegengesetzt (also gegenüberliegend) jeweils ein Flansch 13, 23 angeordnet ist.

Die Flansche weisen jeweils eine Mehrzahl an Kanälen auf, von denen in der Schnittdarstellung nur die Kanäle 14, 24 sichtbar sind. Der Kanal 14 ist dabei in Form eines Sacklochs mit einem (dem Bauteil 20 zugewandt angeordneten) Eingang und einem Kanalende 17 ausgebildet, das dem Eingang gegenüberliegend im Inneren des Bauteils 10 ausgebildet ist. In den Kanal 14 eingesetzt ist ein Gewindeeinsatz 16, in den ein dem Kopf 31a entgegengesetztes Ende des Verbindungselements 30 eingeschraubt ist. Der Kanal 24 hingegen durchkreuzt das Bauteil 20, das eine Ansenkung 27a für den Kopf 31a aufweist.

Die beiden Bauteile 10, 20, die wie diejenigen der Figur 1 insbesondere Gehäuseteile (z.B. Gehäusehälften) einer Turbomaschine sein können, sind in der dargestellten Flanschverbindung an jeweiligen Anlageflächen 15, 25 aneinander anliegend angeordnet. Das Verbindungselement 30 ist dabei in die einander fortsetzenden, hintereinanderliegenden Kanäle 14, 24 eingesetzt.

Beide Kanäle 14, 24 verlaufen schräg zum jeweiligen, dem Flansch 13 bzw. 23 entgegengesetzten Oberflächenbereich 12, 22 des zugehörigen Bauteils 10 bzw. 20. Die Oberflächenbereiche 12, 22 können dabei insbesondere - wie in Fig. 2 dargestellt ist - jeweils an eine Anlagefläche 15 bzw. 25 angrenzen und jeweils eine Flächennormale aufweisen, die senkrecht zur Flächennormale der jeweiligen Anlagefläche 15 bzw. 25 verläuft. Die Oberflächenbereiche 12, 22 können insbesondere auch sehr klein sein, so dass eine eventuelle Krümmung vernachlässigbar sein kann. Der Abstand des jeweiligen Kanals 14, 24 von dem Oberflächenbereich 12, 22 nimmt dabei mit der Kanalrichtung R₁ ab. Das Verbindungselement 30 ragt dabei in den Bauteilabschnitt 11 des Bauteils 10 hinein, so dass die Verspannung in geringem Abstand zu den Oberflächenbereichen und damit auch zur mittleren Wandstärke der Bauteilabschnitte 11, 21 erfolgt; in der Figur 2 ist dies durch als Abstand a gekennzeichnet. Die Nähe der Verspannung an den Oberflächenbereichen 12, 22 bedingt ein verringertes Biegemoment und damit eine verbesserte Formstabilität der Verbindung unter Betriebslasten. Zudem können die Flansche so eine geringe, insbesondere radiale, Ausdehnung haben, was die gezeigte Kompaktheit der Flanschverbindung ermöglicht.

In einer anderen nicht gezeigten Ausführungsform, die sich von der Ausführungsform der Figur 2 unterscheidet, können die beiden Kanäle 14, 24 jeweils senkrecht zur jeweiligen Anlagefläche 15 bzw. 25 verlaufen und die Flächennormalen der Anlageflächen 15, 25 jeweils schräg zu dem jeweiligen Oberflächenbereich 12 bzw. 22 verlaufen. Mit anderen Worten verlaufen die Flächennormalen der Oberflächenbereiche 12, 22 nicht parallel zur jeweiligen Anlagefläche 15 bzw. 25. Dies kann zwar dazu führen, dass eine Verschraubung nur von einer Seite möglich ist, kann aber vorteilhaft für die Herstellung, beispielsweise durch Bohrung, der Kanäle 14, 24 und die Montage sein.

Ebenfalls in der Figur 2 zu erkennen ist ein weiteres Verbindungselement, das in Blickrichtung der Figur hinter dem Verbindungselement 30 angeordnet ist und von dem nur der Kopf 31b sichtbar ist. Dieses Verbindungselement ist analog zum gezeigten Verbindungselement von der anderen Seite in zugehörige Kanäle der Bauteile 10, 20 eingesetzt: Dabei ist (in der Figur nicht dargestellt, aber durch sie impliziert) ein im Bauteil 20 ausgebildeter Kanal als Sackloch mit einem Gewindeeinsatz ausgebildet; dieser Kanal setzt einen Kanal fort, der das Bauteil 10 durchkreuzt. Diese Kanäle haben jeweils eine Kanalrichtung R₂, der gegenüber der Richtung R₁ der Kanäle 14, 24 um eine Achse verschwenkt ist, die in einem Bereich zwischen den Verbindungselementen entlang den Anlageflächen 15, 25 der Bauteile verläuft.

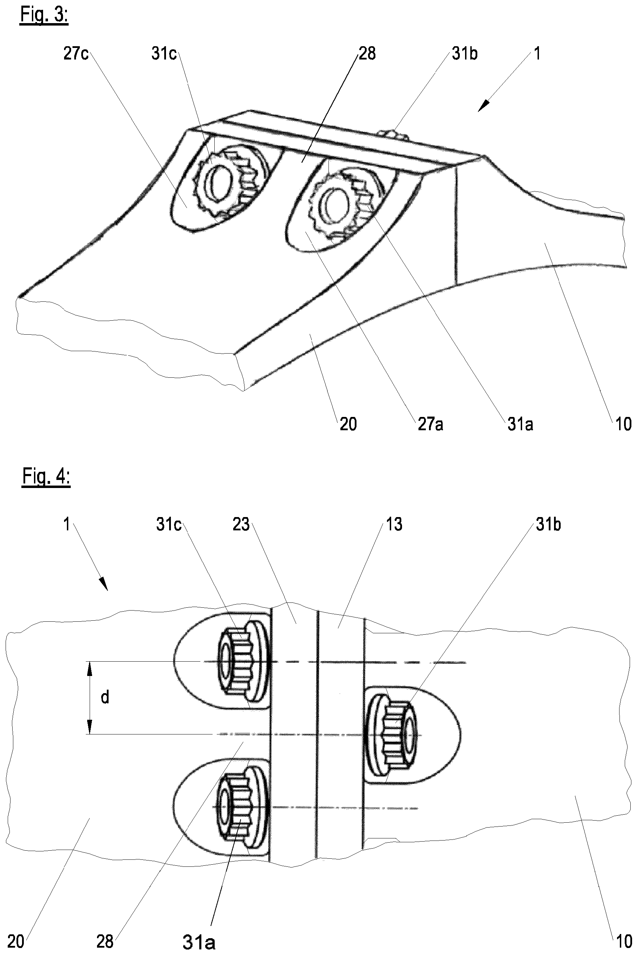

Vorzugsweise sind in entsprechender Weise weitere Kanäle abwechselnd in den Bauteilen 10, 20 angeordnet, beispielsweise abwechselnd parallel zueinander oder gegeneinander verschwenkt; dies ist beispielhaft für insgesamt drei Kanäle in der Figur 3 gezeigt: In der perspektivischen Darstellung eines Abschnitts der Flanschverbindung 1 ist hier der Kopf 31c eines weiteren Verbindungselements zu sehen, der anlog zum Kopf 31a des (in Figur 2 gezeigten) Verbindungselements 30 angeordnet ist; das zum Kopf 31c gehörige Verbindungselement verläuft demgemäß entsprechend. Wie sich aus der Figur ergibt, ist zwischen zwei entlang dem Flansch benachbarten, das Bauteil 20 durchkreuzenden Kanälen zu diesen versetzt (nämlich im Bauteil 10) ein Kanal angeordnet, der das Bauteil 10 durchkreuzt.

Die Köpfe 31a und 31c sind jeweils in zugehörigen Ansenkungen 27a bzw. 27c versenkt, die durch einen Versteifungssteg 28 voneinander getrennt sind. Der Versteifungssteg bewirkt dabei eine weiter erhöhte Formstabilität der Flanschverbindung. Die beiden Bauteile mit den Kanälen und die jeweils hindurchgeführten Verbindungselemente sind gemäß einer Gleitspiegelung angeordnet, wobei die Anlageflächen der Bauteile die Spiegelungsebene darstellen.

In Figur 4 ist ein Abschnitt der Flanschverbindung 1 in einer Draufsicht gezeigt. In dieser Darstellung ist erkennbar, dass die erfindungsgemäße Ausgestaltung der Bauteile mit schrägen Kanälen und deren oben beschriebene Verschwenkung gegeneinander eine dichte Anordnung, also einen kleinen Abstand d benachbarter Verbindungselemente der Flanschverbindung ermöglicht. Dadurch kann eine große Anzahl an Verbindungselementen verwendet und so eine hohe Formstabilität erreicht werden.

Offenbart ist ein Bauteil 10, 20 mit einem Bauteilabschnitt 11, 21 und einem am Bauteilabschnitt angeordneten Flansch 13, 23 zur Verbindung des Bauteils mit einem weiteren Element. Am Flansch ist ein oder sind mehrere schräge Flanschkanäle 14, 24 angeordnet, d.h. Kanäle jeweils zur Aufnahme eines Abschnitts eines Verbindungselements 30, die schräg zu einem dem Flansch entgegengesetzten Oberflächenbereich 12, 22 des Bauteilabschnitts 11, 21 verlaufen. Offenbart ist ferner eine Flanschverbindung 1 mit mindestens einem derartigen Bauteil 10, 20, einem weiteren Bauteil und wenigstens einem Verbindungselement 30. Offenbart ist zudem eine Turbomaschine mit einem Gehäuse, das aus zwei oder mehr Bauteilen mittels einer solchen Flanschverbindung 1 zusammengesetzt ist.

### Bezugszeichen

- 1, 1': Flanschverbindung

- 10, 10', 20, 20': Bauteil
- 11, 11', 21, 21': Bauteilabschnitt
- 12, 12', 22, 22': dem Flansch entgegengesetzter Oberflächenbereich
- 13, 13', 23, 23': Flansch
- 14, 14', 24, 24': Kanal
- 15,25: Anlagefläche
- 16: Gewindeeinsatz
- 17: Kanalendfläche
- 27a, 27c: Ansenkung
- 28: Versteifungssteg

- 30, 30': Verbindungselement
- 31', 31a, 31b, 31c: Kopf eines Verbindungselements

- 40': Mutter

- R1, R2: Kanalrichtung
- a', a: Abstand von Verspannung und mittlerer Wandstärke der Bauteil
- F: auf die Bauteile wirkende Kraft
- d: Abstand benachbarter Verbindungselemente

## Patentansprüche

1. Bauteil (10, 20) mit einem Bauteilabschnitt (11, 21) und einem vom Bauteilabschnitt abgewinkelten und/oder sich aus diesem herauswölbenden Flansch (13, 23) zur Verbindung des Bauteils mit wenigstens einem weiteren Element, wobei das Bauteil und das weitere Element jeweils Teile eines axial bezogen auf eine Rotorachse geteilten Gehäuses einer Turbomaschine sind,
wobei das Bauteil am Flansch mehrere Kanäle (14, 24) jeweils zur Aufnahme eines Abschnitts eines Verbindungselements zur Befestigung des Bauteils und des weiteren Elements aneinander aufweist,
wobei mindestens einer der Kanäle (14, 24) schräg zu einem dem Flansch entgegengesetzten Oberflächenbereich (12, 22) des Bauteilabschnitts verläuft, wobei der dem Flansch entgegengesetzte Oberflächenbereich des Bauteilabschnitts ein Oberflächenbereich ist, dessen Flächennormale parallel zu einer Flanschanlagefläche des betreffenden Flanschs (13, 23) verläuft, **dadurch gekennzeichnet, dass** mindestens zwei der Kanäle an einer Öffnung eine Ansenkung (27a, 27c) zum mindestens teilweisen Aufnehmen eines Kopfes eines Verbindungselements aufweisen, eine bzw. mindestens einer der mehreren Kanäle als Sackloch (14) mit einem Eingang und einem im Inneren des Bauteils angeordneten Kanalende (17) ausgebildet ist und zwischen mindestens zwei benachbarten Ansenkungen der Ansenkungen (27a, 27c) ein Versteifungssteg (28) angeordnet ist.

2. Bauteil nach Anspruch 1, wobei mindestens einer der Kanäle (14, 24) senkrecht zur Anlagefläche (15, 25) des Bauteils verläuft.

3. Bauteil nach einem der vorhergehenden Ansprüche, das mindestens zwei Kanäle (14, 24) aufweist, die in unterschiedlichen Winkeln zum besagten Oberflächenbereich (12, 22) stehen.

4. Bauteil nach einem der vorhergehenden Ansprüche, wobei mindestens einer der mehreren Kanäle (24) das Bauteil durchkreuzt.

5. Flanschverbindung (1) mit wenigstens zwei Bauteilen (10, 20), von denen wenigstens eines gemäß einem der vorhergehenden Ansprüche ausgebildet ist, sowie mit wenigstens einem Verbindungselement (30), von dem ein Abschnitt zur Befestigung der Bauteile aneinander durch mindestens einen der Kanäle (14, 24) hindurchgeführt ist oder hindurchgeführt werden kann.

6. Flanschverbindung gemäß Anspruch 5, bei der ein erstes der Bauteile (10, 20) gemäß Anspruch 4 ausgebildet ist und ein zweites Bauteil gemäß Anspruch 1, und wobei das mindestens eine Verbindungselement (30) durch einen das erste Bauteil durchkreuzenden Kanal (24) hindurch in einen als Sackloch (14) ausgebildeten Kanal des zweiten Bauteils hineingeführt bzw. einzuführen ist.

7. Flanschverbindung gemäß einem der Ansprüche 5 oder 6, bei der beide Bauteile gemäß Anspruch 4 ausgebildet sind, wobei zwischen zwei entlang dem Flansch benachbarten, ein erstes der Bauteile durchkreuzenden Kanälen und zu diesen versetzt ein Kanal angeordnet oder anzuordnen ist, der das zweite der Bauteile durchkreuzt.

8. Turbomaschine mit einem Gehäuse, das aus zwei oder mehr Bauteilen (10, 20) mittels einer Flanschverbindung (1) nach einem der Ansprüche 5 bis 7 zusammengesetzt ist.

## Claims

1. Component (10, 20) comprising a component portion (11, 21) and a flange (13, 23) which is angled away from the component portion and/or bulges out of same for connecting the component to at least one further element, the component and the further element each being parts of a turbomachine housing which is divided axially relative to a rotor axis,
the component having a plurality of channels (14, 24) on the flange in each case for receiving a portion of a connecting element for fastening the component and the further element to one another,
at least one of the channels (14, 24) extending obliquely to a surface region (12, 22) of the component portion opposite the flange, the surface region of the component portion opposite the flange being a surface region of which the surface normal extends in parallel with a flange abutment surface of the flange (13, 23) in question, **characterized in that** at least two of the channels have a countersink (27a, 27c) at an opening for at least partially receiving a head of a connecting element,
one or at least one of the plurality of channels is designed as a blind hole (14) with an inlet and a channel end (17) arranged inside the component, and a stiffening rib (28) is arranged between at least two adjacent countersinks of the countersinks (27a, 27c).

2. Component according to claim 1, wherein at least one of the channels (14, 24) extends perpendicularly to the abutment surface (15, 25) of the component.

3. Component according to either of the preceding claims, comprising at least two channels (14, 24) which are at different angles to said surface region (12, 22).

4. Component according to any of the preceding claims, wherein at least one of the plurality of channels (24) crosses the component.

5. Flange connection (1) comprising at least two components (10, 20), of which at least one is designed according to any of the preceding claims, and comprising at least one connecting element (30), of which a portion for fastening the components to one another is or can be guided through at least one of the channels (14, 24).

6. Flange connection according to claim 5, wherein a first of the components (10, 20) is designed according to claim 4 and a second component is designed according to claim 1, and wherein the at least one connecting element (30) is guided or is to be inserted through a channel (24) which crosses the first component into a channel of the second component designed as a blind hole (14).

7. Flange connection according to any of claims 5 or 6, wherein the two components are designed according to claim 4, wherein a channel which crosses the second of the components is arranged or is to be arranged between two channels which are adjacent along the flange and cross a first of the components, and is offset therefrom.

8. Turbomachine comprising a housing which is composed of two or more components (10, 20) by means of a flange connection (1) according to any of claims 5 to 7.

## Revendications

1. Composant (10, 20) comportant une section de composant (11, 21) et une bride (13, 23) coudée à partir de la section de composant et/ou bombée à partir de celle-ci pour le raccord du composant à au moins un autre élément, dans lequel le composant et l'autre élément sont respectivement des pièces d'un boîtier divisé axialement par rapport à un axe de rotor d'une turbomachine,
dans lequel le composant présente sur la bride plusieurs canaux (14, 24) respectivement pour la réception d'une section d'un élément de raccord pour la fixation du composant et de l'autre élément l'un à l'autre,
dans lequel au moins l'un des canaux (14, 24) s'étend obliquement par rapport à une zone de surface (12, 22) opposée à la bride de la section de composant, dans lequel la zone de surface opposée à la bride de la section de composant est une zone de surface dont la normale de surface s'étend parallèlement à une surface d'appui de bride de la bride (13, 23) concernée, **caractérisé en ce qu'**au moins deux des canaux présentent, au niveau d'une ouverture, un évidement (27a, 27c) pour la réception au moins partielle d'une tête d'un élément de raccord,
un ou au moins l'un des plusieurs canaux est formé comme un trou borgne (14) comportant une entrée et une extrémité de canal (17) agencée à l'intérieur du composant et une nervure de renforcement (28) est agencée entre au moins deux évidements adjacents des évidements (27a, 27c).

2. Composant selon la revendication 1, dans lequel au moins l'un des canaux (14, 24) s'étend perpendiculairement à la surface d'appui (15, 25) du composant.

3. Composant selon l'une des revendications précédentes, lequel présente au moins deux canaux (14, 24) qui sont situés à des angles différents par rapport à ladite zone de surface (12, 22).

4. Composant selon l'une des revendications précédentes, dans lequel au moins l'un des plusieurs canaux (24) traverse le composant.

5. Raccord à bride (1) comportant au moins deux composants (10, 20) dont au moins l'un est formé selon l'une des revendications précédentes, et comportant au moins un élément de raccord (30) dont une section pour la fixation des composants l'un à l'autre est traversée ou peut être traversée par au moins l'un des canaux (14, 24).

6. Raccord à bride selon la revendication 5, dans lequel un premier des composants (10, 20) est formé selon la revendication 4 et un second composant selon la revendication 1, et dans lequel l'au moins un élément de raccord (30) est introduit ou doit être introduit à travers un canal (24) traversant le premier composant jusque dans un canal formé comme un trou borgne (14) du second composant.

7. Raccord à bride selon l'une des revendications 5 ou 6, dans lequel les deux composants sont formés selon la revendication 4, dans lequel un canal traversant le second des composants est agencé ou doit être agencé entre deux canaux adjacents le long de la bride et traversant un premier des composants et est décalé de ceux-ci.

8. Turbomachine comportant un boîtier, lequel est constitué de deux composants (10, 20) ou plus au moyen d'un raccord à bride (1) selon l'une des revendications 5 à 7.
